# EUROPEAN PATENT SPECIFICATION

(11) **EP 2 897 207 B1**
(45) Date of publication and mention of the grant of the patent: **24.08.2016**
(21) Application number: 15151860.2
(22) Date of filing: 20.01.2015
(51) Int. Cl.: H01M 10/04, H01M 10/12, H01M 4/20, H01M 4/73

(54) **SPREADING MACHINE FOR GRIDS FOR OBTAINING ELECTRIC STORAGE BATTERIES**
LEGEMASCHINE FÜR GITTER ZUR HERSTELLUNG ELEKTRISCHER AKKUMULATOREN
MACHINE D'ÉPANDAGE DE GRILLES POUR OBTENIR DES BATTERIES DE STOCKAGE ÉLECTRIQUE

(30) Priority: 21.01.2014 IT PD20140012
(43) Date of publication of application: 22.07.2015
(73) Proprietor: Sovema S.p.A., 37069 Villafranca (VR) (IT)
(72) Inventor: Farina, Pietro, 37069 Villafranca (VR) (IT)
(74) Representative: Gallo, Luca

(56) References cited:
- GB-A- 1 428 677
- US-A- 4 174 004
- US-A- 5 467 805

## Description

### Field of application

The present invention regards a spreading machine for grids for obtaining electric storage batteries, according to the preamble of the independent claim.

The present machine is intended to be employed in the industrial processes of production of electric storage batteries, in which a continuous strip of grids is obtained starting from a strip of lead; from such strip of grids, by means of specific operative steps, the single plates are obtained that are adapted to be inserted in the box-like body of the electric storage batteries in an electrolyte solution bath.

In particular, the machine, subject of the present invention, is intended to be employed for spreading, on the continuous strip of grids, a lead oxide - based paste which constitutes the active material of the plates of the electric storage batteries, adapted to chemically react with the aforesaid electrolyte solution during the operation of the storage batteries themselves.

### State of the art

The plants for producing lead electric storage batteries conventionally comprise machines for forming grids, which are provided with a punch and with a matrix facing each other, between which a continuous strip made of lead alloy is advanced (by means of drive means). The latter is cut by means of multiple punching in succession, in order to produce, at the outlet of the forming machine, a strip of grids each provided with a specific mesh of threads that delimit a plurality of holes between them.

The aforesaid plants also comprise spreading machines adapted to distribute, on the continuous strip of grids, a paste of active material (generally constituted by oxides with lead base) in a manner such that the active material fills the holes between the threads of the grids and completely covers the surface of the threads themselves.

From such grids covered with the active material - by means of successive operative steps executed by machines provided downstream of the plant - the plates are obtained that are intended to be inserted with the two different poles in the box-like body of the electric storage batteries in an electrolyte solution bath (in particular constituted by a solution of sulfuric acid and distilled water).

The active material paste of the plates, during the operation of the lead storage batteries, chemically reacts with the ions of the electrolyte solution in which the plates themselves are immersed, so as to obtain the electrolytic reactions that allow the generation of electrical energy by the storage batteries.

In addition, the active material has the function of protecting the grids from the attack of the acids of the electrolyte solution, which would cause the corrosion of the grids themselves, compromising the operation of the electric storage battery. It is therefore very important that the active material paste completely covers the surface of the threads of the grids in order to ensure the integrity of the plates and hence the operation of the electric storage batteries.

The spreading machines of known type, such as for example that described in the Italian patent No. IT01304200, comprise a support structure abutted against the ground and provided with at least one slide channel along which the aforesaid strip of grids advances, moved by a pair of counter-rotating rollers arranged upstream of the machine and by a traction roller arranged downstream of the machine itself.

In addition, the spreading machine comprises a hopper fixed to the support structure above the slide channel and fed with the active material paste to be distributed on the strip of grids.

More in detail, the hopper is provided at its interior with distribution means (for example constituted by a pair of counter-rotating rollers) adapted to convey the active material paste towards a lower opening of the hopper in order to distribute the active material paste on the strip of grids that passes below the hopper itself.

In addition, the spreading machine comprises a rotating drum arranged below the hopper and intended to receive the strip of grids in abutment when it passes below the lower opening of the hopper itself, in order to support the strip and guide its advancing beyond the hopper after the active material paste has been distributed on the strip of grids.

The spreading machine also comprises a fixed separation plate arranged horizontally in front of the rotating drum, and adapted to maintain the strip of grids initially raised above the rotating drum when the strip of grids itself passes below the hopper in order to receive the active material paste.

More in detail, in operation, the strip of grids slides above the separation plate which is placed at a height such that the strip of grids, once it has moved beyond plate, initially remains raised above the rotating drum so as to allow one part of the active material paste, coming from the hopper, to fall below the strip of grids, passing through the holes of the latter.

Subsequently, when the strip of grids comes to be abutted against the rotating drum, the latter compresses the active material paste that has fallen below the grids, in a manner such that the paste portion, that has passed through each hole of the grids, is spread below of the strip of grids, joining with the paste portions that have passed through the adjacent holes, in order to completely cover the lower surface of the threads of the grids. The main drawback of the spreading machine of known type described in the patent IT 1304200 is due to the fact that such machine requires the passage below the grid of a high quantity of active material paste so that, in the subsequent compression exerted by the rotating drum, the quantity of paste is sufficient to be spread over the entire lower surface of the threads, with consequent high production costs for the electric storage batteries. Such drawback is particularly severe in the case of grids provided with a dense weave of threads and hence having a relatively extensive solid surface.

In particular, it is necessary to deposit, on the lower surface of the grids, a thickness of active material paste greater than that strictly necessary for obtaining the electrochemical reactions for the operation of the storage batteries.

In addition, the introduction of a high thickness of active material paste below of the strip of grids facilitates the falling of the active material paste from the grids before the paste itself is compressed by the rotating drum, preventing the complete coverage of the threads and involving a waste of active material paste.

In addition, a further drawback is due to the fact that the rotating drum, in order to compress the active material paste, exerts an upward-directed force on the lower surface of the strip of grids which tends to lift the strip of grids, limiting the compression of the paste between the rotating drum and the lower surface of the grids. This involves a limited extension of the active material paste below the grids, with the consequent risk of not covering the entire lower surface of the threads of the grids themselves.

An apparatus for spreading an active material paste on lead grids to manufacture plates for electrical accumulators is disclosed in US5467805 A.

### Presentation of the invention

In this situation, the problem underlying the present invention is therefore that of overcoming the drawbacks manifested in the solutions of known type, by providing a spreading machine for grids for obtaining electric storage batteries which is entirely reliable in operation and in particular capable of completely covering the surface of the threads of the grids with the active material paste.

A further object of the present invention is to provide a spreading machine for grids for obtaining electric storage batteries which is capable of operating in an efficient manner, employing a relatively low quantity of active material paste.

A further object of the present invention is to provide a spreading machine for grids for obtaining electric storage batteries which is capable of operating in an entirely efficient manner, even with strips of grids provided with a particularly dense weave.

A further object of the present invention is to provide a spreading machine for grids for obtaining electric storage batteries which is capable of spreading the active material paste on the grids in an economical manner and in particular without waste of the active material paste itself.

A further object of the present finding is to provide a spreading machine for grids for obtaining electric storage batteries which is structurally simple and inexpensive to obtain. These objects and still others are all attained by the spreading machine for grids for obtaining electric storage batteries, subject of the present invention.

### Brief description of the drawings

The technical characteristics of the invention, according to the aforesaid objects, can be clearly seen in the contents of the below-reported claims and the advantages thereof will be clearer in the following detailed description, made with reference to the enclosed drawings, which represent a merely exemplifying and non-limiting embodiment of the invention, in which:
- figure 1 shows a side view of the spreading machine for grids, subject of the present invention;
- figure 2 shows a top plan view of the spreading machine, subject of the present invention;
- figure 3 shows a detail of a section view of the spreading machine illustrated in figure 2 along the line III - III of the same figure 2;
- figure 4 shows a top perspective view of a detail of the spreading machine, subject of the present invention, relative to the separation body for spacing the strip of grids from the support means arranged below the distribution hopper for the active material paste;
- figure 5 shows a top plan view of the separation body of the spreading machine illustrated in figure 4;
- figure 6 shows a section view of the separation body illustrated in figure 5 along the line VI - VI of the same figure 5;
- figure 7 shows a detail of the separation body illustrated in figure 6, reported inside the circle VII of the same figure 6.

### Detailed description of a preferred embodiment

With reference to the enclosed drawings, reference number 1 indicates overall the spreading machine for grids for obtaining electric storage batteries, subject of the present invention.

The present spreading machine 1 is intended to be advantageously employed in a plant for producing electric storage batteries, which conventionally comprises a grid forming machine upstream of the present machine 1. Such grid forming machine produces - starting from a solid strip of lead alloy and by means of punching - a continuous strip of grids in succession. In particular, the grids produced by the forming machine are provided with a mesh of threads, which delimit a plurality of holes between them.

The spreading machine 1, subject of the present invention, is adapted to receive at the inlet the aforesaid continuous strip of grids and is adapted to distribute, on such grids, a paste of active material (generally comprising oxides with lead base) in a manner such that the active material paste fills the holes between the threads of the grids and completely covers the surface of the threads of the grids themselves.

In particular, the active material paste is substantially viscous and relatively sticky in order to be distributed and attached to the surface of the grids.

Hereinbelow, reference will be made in particular to an embodiment regarding a spreader for grids made of lead alloy for obtaining plates for electric storage batteries; nevertheless, it is intended that the materials that constitute the grids and the active material paste can be of any type adapted to be employed for the construction of electric storage batteries.

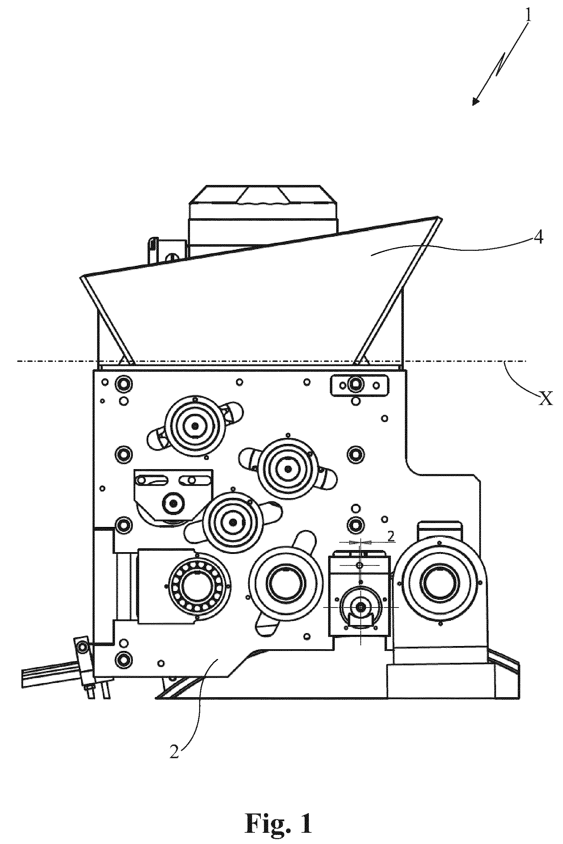

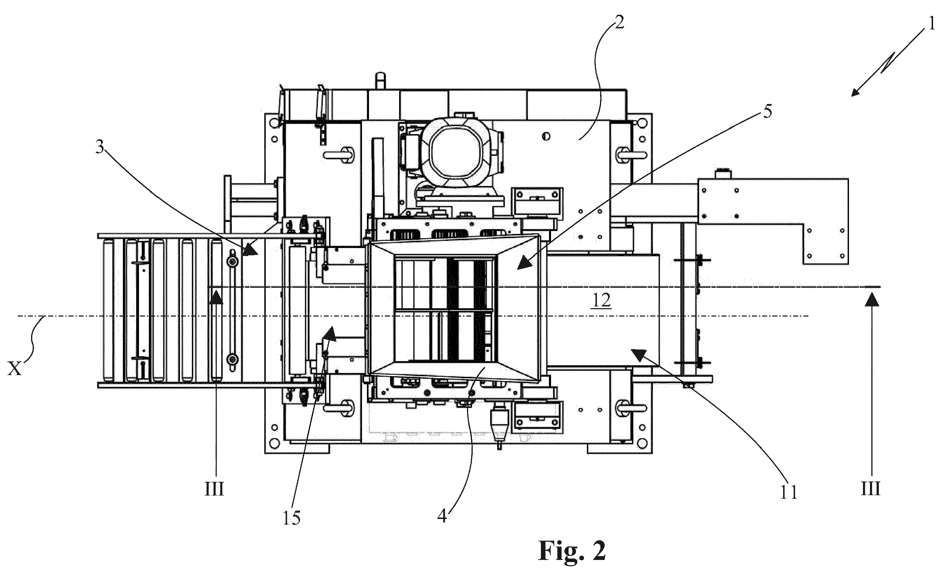

With reference to the embodiment illustrated in the figures 1 and 2, the spreading machine 1 comprises a support structure 2 provided with a slide channel 3 being extended according to an extension direction X along which it is susceptible to advance the aforesaid strip of grids. Such strip is advantageously made to advance along the slide channel 3 according to a specific advancement sense (which goes from left to right in the embodiment in figures 1 and 2) by means of feed groups and traction groups (not illustrated) preferably arranged upstream and downstream of the machine 1 and not described in detail since they are of the type *per se* known to the man skilled in the art. According to the invention, the spreading machine 1 comprises a hopper 4 fixed to the support structure 2 and arranged above the slide channel 3 along which the strip of grids slides, on which the active material paste is deposited. More in detail, the hopper 4 is provided with an upper opening 5, through which the hopper 4 is susceptible to be fed with the active material paste (by feeding means of the type *per se* known to the man skilled in the art and hence not described in detail), and is provided with a lower opening 6, through which the active material paste is susceptible to be distributed on the strip of grids that advances below the hopper 4 itself.

Advantageously, the hopper 4 at its interior is provided with distribution means 7 adapted to convey active material paste towards the lower opening 6 of the hopper 4 in order to distribute the active material paste on the underlying strip of grids.

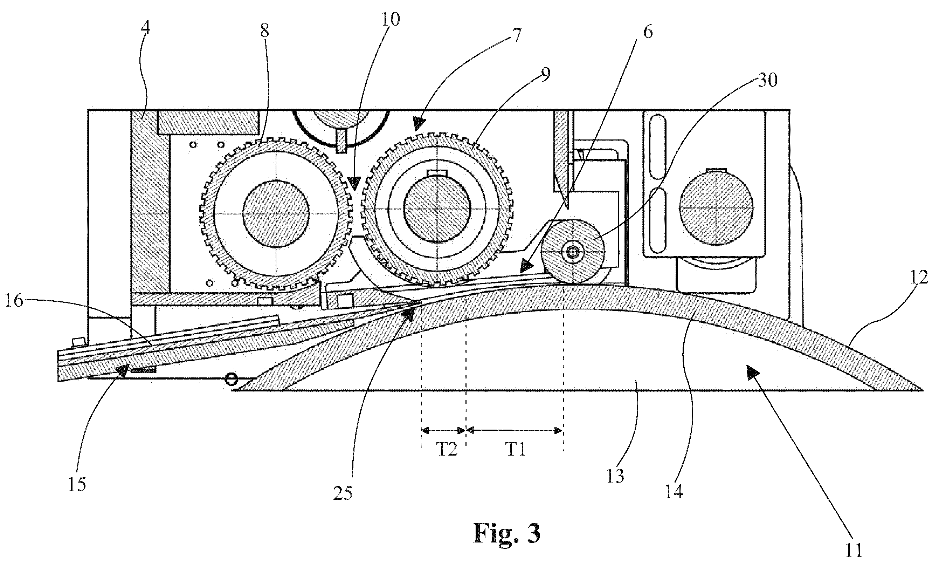

In accordance with the embodiment particular illustrated in figure 3, the distribution means 7 comprise a pair of counter-rotating rollers 8, 9, arranged parallel to each other in proximity to the lower opening 6 of the hopper 4. In particular, the two rollers 8, 9 delimit between them a distribution slit 10 positioned above the lower opening 6 of the hopper 4, and through which the active material paste is susceptible to fall, which is fed into the hopper 4 through the upper opening 5 thereof and which is conveyed into such distribution slit 10 from the lateral surfaces (preferably toothed) of the rollers 8, 9.

The strip of grids (moved by the aforesaid feeding and traction groups of the spreading machine 1 for advancing along the slide channel 3) is provided with an upper face, intended to face the lower opening 6 of the hopper 4 in order to be directly covered by the active material paste that descends from the hopper 4, and with a lower face directed in the sense opposite the upper face and which is also intended to be covered with the active material paste as will be described in detail hereinbelow.

The spreading machine 1 also comprises support means 11 mounted on the support structure 2, positioned at least partially below the hopper 4, and provided with a movable surface 12, that can be driven to advance according to the slide sense of the strip of grids at least at the slide channel 3. Such movable surface 12 is susceptible to receive the strip of grids in abutment at a support section T1 of the slide channel 3 arranged below the lower opening 6 of the hopper 4, in order to support the strip of grids and guide the advancing thereof beyond the hopper 4 after the active material paste has been distributed on the strip of grids itself.

Advantageously, in accordance with the embodiment illustrated in the enclosed figures, the support means 11 comprise a rotating drum 13, rotatably constrained to the support structure 2 of the spreading machine 1 and having substantially horizontal rotation axis orthogonal to the extension direction X of the slide channel 3.

The rotating drum 13 is provided with a cylindrical wall 14, preferably made of non-deformable material (in particular steel), which is provided with an external surface that defines the movable surface 12 of the support means 11 and faces, with one portion thereof, the lower opening 6 of the hopper 4 at at least the aforesaid support section T1 of the slide channel 3, in order to receive in abutment the strip of grids on which the active material paste has been deposited.

In particular, the diameter of the rotating drum 13 advantageously has size such to form, at the support section T1 of the slide channel 3 arranged below the hopper 4, a substantially flat surface on which the strip of grids is susceptible to be abutted.

The rotating drum 13 is driven by motor means (not illustrated) to rotate in a manner such that the external surface of the cylindrical wall 14 of the drum 13 itself, at the upper sector thereof, advances according to the advancement sense of the strip of grids in order to guide the latter downstream of the hopper 4.

In accordance with a different embodiment not illustrated in the enclosed figures, the support means 11 comprise a conveyor belt arranged below the hopper 4 and comprising a movable belt wound around two pulleys rotatably mounted on the support structure 2 of the spreading machine 1; of these pulleys, at least one is motorized for moving the movable belt.

According to the invention, the spreading machine 1 comprises a separation body 15, integral with the support structure 2, arranged in the slide channel 3 upstream of the aforesaid support section T1 (with respect to the advancement sense of the strip of grids), and provided with a guide surface 16 on which the lower face of the strip of grids is susceptible to slide before abutting against the support means 11.

More in detail, the separation body 15 is at least partially positioned above the movable surface 12 of the support means 11, guiding, with its guide surface 16, the strip of grids to slide spaced from the aforesaid movable surface 12 at a separation section T2 of the slide channel 3 arranged between the separation body 15 itself and the aforesaid support section T1, and being at least partially extended below the lower opening 6 of the hopper 4.

In this manner, the strip of grids, when it reaches below the lower opening 6 of the hopper 4 and before abutting against the movable surface 12 of the support means 11, travels the aforesaid separation section T2 spaced from the movable surface 12 of such support means 11, in order to allow a part of the active material paste, which comes from the hopper 4, to descend below the lower face of the strip of grids, passing through the holes of the grids themselves.

Subsequently, when the strip of grids reaches the support section T1 of the slide channel 3, coming to be abutted against the movable surface 12 of the support means 11, the part of active material descended below the strip of grids is compressed between the lower face of the latter and the aforesaid movable surface 12 of the support means 11, in a manner such to be uniformly distributed with a specific thickness suitable for ensuring the electrochemical reactions necessary for the correct operation of the storage batteries in which the grids will be inserted.

In accordance with the embodiment illustrated in figure 3, the separation body 15 is arranged above the external surface of the cylindrical wall 14 of the rotating drum 13, spaced from such external surface, and positioned at the upper sector of the rotating drum 13 upstream of the top of the latter and at a lower height than such top.

In this manner, in operation, when the strip of grids (following the advancement thereof along the slide channel 3) moves beyond the separation body 15, the strip is initially situated at a height higher than that of the external surface of the cylindrical wall 14 of the rotating drum 13, remaining separated from the external surface itself (by the aforesaid separation section T2) until it reaches a portion of the rotating drum 13 arranged at a height higher than that of the separation body 15 (at the aforesaid support section T1).

Advantageously, in accordance with the embodiment illustrated in figure 3, the spreading machine 1 comprises a finishing roller 30 arranged above the slide channel 3, preferably at the top of the rotating drum 13, at an adjustable distance from the external surface of the latter corresponding with the desired optimal thickness of the active material paste deposited on the upper face of the strip of grids. In operation, the strip of grids (with its two faces covered with active material paste) passes between the finishing roller 30 and the top of the rotating drum 13, which level the possible non-uniformities of the thickness of the active material paste deposited on the two faces of the strip of grids themselves.

In accordance with the idea underlying the present invention, the separation body 15 of the spreading machine 1 is provided with a cavity 17 obtained on the guide surface 16 of the separation body 15 itself, and arranged below the lower opening 6 of the hopper 4. Such cavity 17 of the separation body 15 is adapted to receive at its interior a part of the active material paste, which is distributed from the hopper 4 on the strip of grids and which traverses the holes of the grids, falling below the strip of grids itself at the aforesaid cavity 17, filling the latter.

In particular, the part of active material paste that fell within the cavity 17 comprises a surface layer, arranged substantially flush with the guide surface 16 of the separation body 15 and intended to be attached to the lower face of the strip of grids in order to cover it.

More in detail, the strip of grids is adapted to slide above the cavity 17, bringing its lower face in contact with the surface layer of the part of active material paste contained in the cavity 17 itself, such surface layer adhering to said lower face, covering it.

In particular, the viscous and adhesive nature of the active material paste allows the surface layer of the paste contained in the cavity 17 to be attached to the lower face of the strip of grids simply following the sliding contact of the lower face of the strip of grids on the surface layer of the active material paste.

Once the surface layer of the active material paste in the cavity 17 exits therefrom, following the adhesion of the paste to the lower face of the threads of the grids that have passed above the cavity 17, the latter is immediately filled with the active material paste that descends into the cavity 17 through the holes of the grids that subsequently pass above the cavity 17 itself.

The cavity 17 of the separation body 15 of the spreading machine 1 according to the present invention allows completely covering the lower face of the strip of grids with a layer of active material paste since, following the advancement of the strip of grids along the slide channel 3, the entire lower face of the strip subsequently comes into contact with the surface layer of the active material paste contained in the cavity 17 of the separation body 15, such active material attaching to the lower face of the strip of grids (as described above).

In this manner, therefore, the spreading machine 1 allows ensuring the complete insulation of the grids from the oxidizing and corrosive agents of the electrolyte solution of the cells of the storage batteries in which the plates obtained with the aforesaid grids are inserted, since the lower face of the strip of grids is covered with the surface layer of the active material paste contained in the cavity 17 of the separation body 15 and the upper face of the strip is directly covered by the paste that descends from the hopper 4. In particular, the spreading machine 1, subject of the present invention, allows separating the step of covering the lower face of the strip of grids in order to ensure the insulation thereof (obtained with the passage of the strip above the cavity 17 of the separation body 15 filled with the active material paste) from the step of distributing, below the strip of grids, the thickness of active material paste necessary for obtaining the electrochemical reactions that take place during the operation of the storage batteries (such distribution step is obtained in the subsequent passage of the strip along the separation section T2 and support section T1 of the slide channel 3 as described above). Therefore, since the covering of the lower face of the strip of grids is obtained by means of the cavity 17 of the separation body 15, the spreading machine 1 allows executing the subsequent distribution of the active material paste using the quantity thereof strictly necessary for obtaining a thickness of the paste such to ensure the aforesaid electrochemical reactions, without having to use an overabundant quantity of paste for ensuring the complete coverage of the lower face of the strip of grids (as is instead required by the machines of known type discussed above), hence allowing a reduced use of active material paste and preventing waste thereof, with consequent economical savings in the production of the storage batteries.

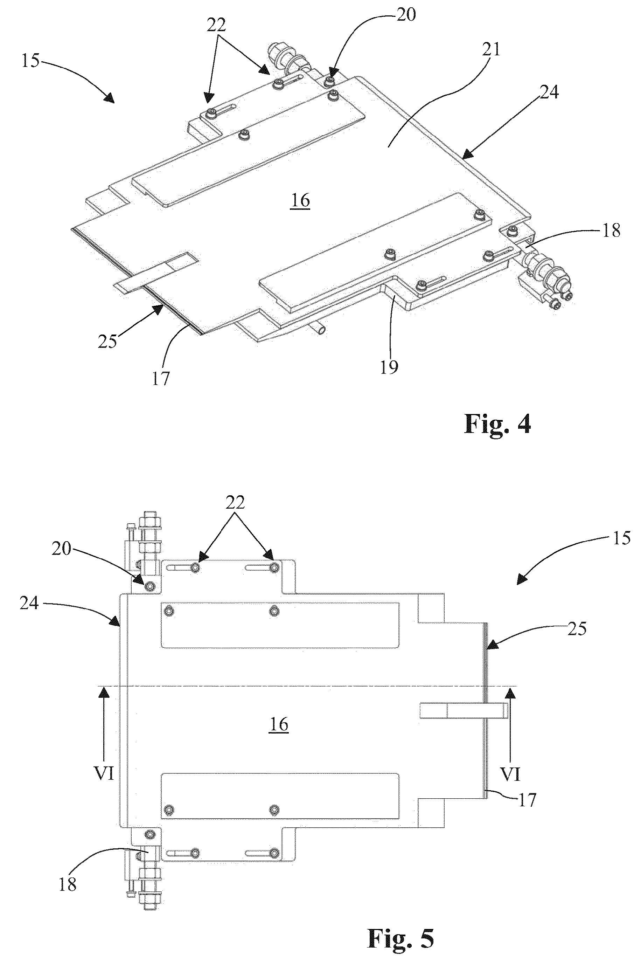

Advantageously, in accordance with the embodiment illustrated in the figures 4 - 6, the separation body 15 of the spreading machine 1 has a substantially plate-like form and is fixed to the support structure 2 preferably by means of a transverse support bar 18.

In particular, the separation body 15 comprises a first metal sheet 19 to which the support bar 18 is fixed on the lower part (preferably by means of first fixing screws 20), and a second metal sheet 21 fixed above the first sheet 19 (preferably by means of second fixing screws 22) and provided with an upper surface, preferably substantially flat, which defines the guide surface 16 of the separation body 15 itself. Advantageously, with reference to the embodiment illustrated in figure 3, the guide surface 16 of the separation body 15 is substantially flat and is preferably tilted upward, according to the slide direction of the strip of grids, in order to guide the strip of grids towards the top of the rotating drum 13 in a manner such that the strip of grids, at the aforesaid support section T1 of the slide channel 3, is substantially tangentially abutted against the external surface of the rotating drum 13.

Advantageously, the cavity 17 of the separation body 15 is extended according to a direction transverse to the extension direction X of the slide channel 3 substantially for the entire width of the guide surface 16, in order to cover (with the active material paste arranged inside the cavity 17 itself) the entire width of the lower face of the strip of grids.

In accordance with the particular embodiment illustrated in the enclosed figures 3 - 6, the cavity 17 of the separation body is extended longitudinally orthogonal to the extension direction X and preferably with elongated form.

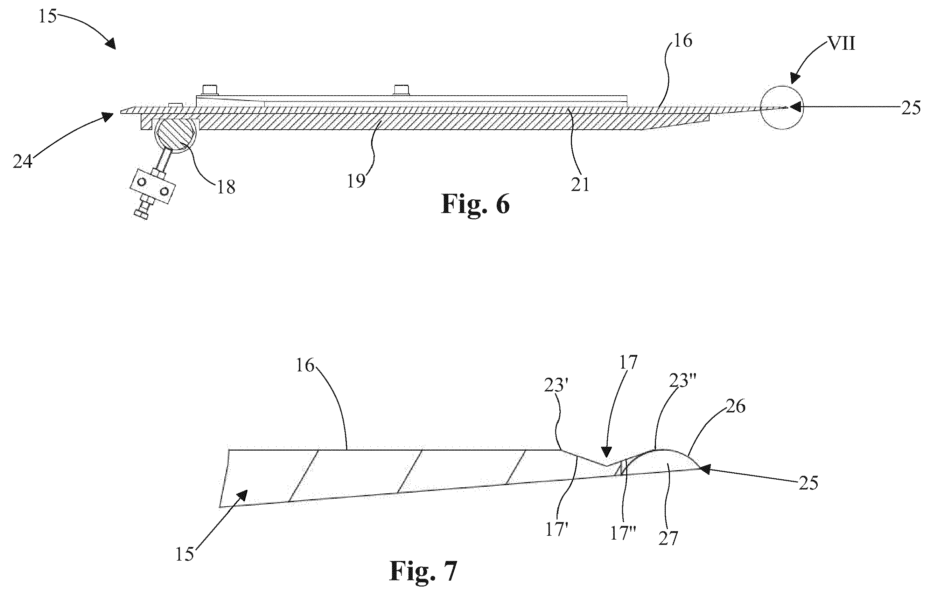

With reference to the particular embodiment illustrated in figure 7, the cavity 17 of the separation body 15 has a transverse profile with substantially V-shaped section and is preferably limited on the lower part by a first and second bottom face 17', 17" preferably tilted with respect to each other and incident at a lower vertex of the transverse section of the cavity 17 itself.

Advantageously, the cavity 17 of the separation body 15 is extended, according to the extension direction X, between a first longitudinal side 23' (which on the upper part delimits the first bottom face 17') and a second longitudinal side 23" (which on the upper part delimits the second bottom face 17"), preferably parallel to each other. Advantageously, the cavity 17 is extended, between its two longitudinal sides 23', 23", for a width comprised approximately in the interval 2 - 8 mm and preferably is approximately 4 mm. In particular, the cavity 17 has approximately 0.5 - 1.5 mm depth, and in particular approximately 0.7 - 0.8 mm depth.

The cavity 17 is advantageously obtained by means of a groove obtained on the guide surface 16 of the separation body 15 preferably by means of milling.

With reference to the embodiment illustrated in the figures 3 - 6, the guide surface 16 of the separation body 15 is extended, according to the extension direction X, between a first end edge 24 and a second end edge 25, preferably parallel to the first 24, and adjacent to the separation section T2 (of the slide channel 3) into which the strip of grids enters after having moved beyond the guide surface 16 of the separation body 15 remaining spaced from the support means 11.

Advantageously, the cavity 17 of the separation body 15 is positioned at the aforesaid second end edge 25 of the guide surface 16 of the separation body 15, and is preferably extended parallel to such second end edge 25.

Advantageously, with reference to the embodiment illustrated in figure 7, the separation body 15 is provided with a distribution surface 26 being extended between the cavity 17 and the second end edge 25 of the guide surface 16 of the separation body 15 itself. The lower face of the strip of grids is susceptible to slide on such distribution surface 26 which uniformly distributes, on the lower face of the strip of grids itself, the layer of active material paste that remained adherent to such lower face following the previous passage of the strip of grids above the cavity 17.

Preferably, the aforesaid distribution surface 26 is extended between the second longitudinal side 23" of the cavity 17 and the second end edge 25 of the guide surface 16 of the separation body 15.

Advantageously, the distribution surface 26 of the separation body 15 substantially has rounded form with convexity that is extended on the guide surface 16 of the separation body 15 itself, in order to facilitate the sliding of the strip of grids on the distribution surface 26 and in particular prevent the threads of the grids of the strip from getting stuck on the distribution surface 26 itself.

In particular, the distribution surface 26 is tangent with the surface of the second bottom face 17" of the cavity 17 at the second longitudinal side 23" of the cavity 17 itself.

In particular, the distribution surface 26 of the separation body 15 is extended for an arc of circumference with diameter approximately comprised between 2 and 10 mm, and preferably is approximately 4 mm.

Advantageously, the distribution surface 26 of the separation body 15 is defined by the external surface of a shaped portion 27, preferably with circular segment form, and fixed to the second end edge 25 of the guide surface 16 of the separation body 15 itself. More in detail, such shaped portion 27 is advantageously obtained with a metal rod fixed, preferably via welding, to the second end edge 25 of the guide surface 16 of the separation body 15, and leveled on the lower part. In particular, the rod is positioned with the upper point of its external surface flush with the distribution surface 26 of the separation body 15 itself.

The invention thus conceived therefore attains the pre-established objects.

## Claims

1. Spreading machine (1) for grids for obtaining electric storage batteries, which comprises:
- a support structure (2) provided with at least one slide channel (3) being extended according to an extension direction (X) along which it is susceptible to advance a strip of grids provided with a plurality of through holes;
- at least one hopper (4) arranged above said slide channel (3) and provided with at least one lower opening (6), through which said hopper (4) is adapted to distribute a paste of active material on said strip of grids;
- support means (11) mounted on said support structure (2), positioned at least partially below said hopper (4), and provided with a movable surface (12) susceptible to receive said strip of grids in abutment at least at a support section (T1) of said slide channel (3) arranged below the lower opening (6) of said hopper (4);
- at least one separation body (15), integral with said support structure (2), arranged in said slide channel (3) upstream of said support section (T1) with respect to the advancement sense of said strip of grids, and provided with a guide surface (16) on which a lower face of said strip of grids is susceptible to slide;
said separation body (15) being at least partially positioned above the movable surface (12) of said support means (11), and being adapted to guide said strip of grids to slide spaced from said movable surface (12) at a separation section (T2) of said slide channel (3) arranged between said separation body (15) and said support section (T1), and being extended at least partially below the lower opening (6) of said hopper (4);
said spreading machine (1) being **characterized in that** said separation body (15) is provided with a cavity (17) obtained on said guide surface (16), arranged below the lower opening (6) of said hopper (4), and adapted to receive at its interior at least one part of said active material paste, which is distributed from said hopper (4) on said strip of grids and which traverses the holes of said grids, falling below said strip of grids; said strip of grids being adapted to slide above said cavity (17), bringing its lower face in contact with a surface layer of said part of active material paste contained in said cavity (17), such surface layer adhering to said lower face, covering it.

2. Spreading machine (1) according to claim 1, **characterized in that** the cavity (17) of said separation body (15) is extended at least according to a direction transverse to the extension direction (X) of said slide channel (3) substantially for the entire width of said guide surface (16).

3. Spreading machine (1) according to claim 1 or 2, wherein the guide surface (16) of said separation body (15) is extended according to said extension direction (X) between a first end edge (24) and a second end edge (25) adjacent to the separation section (T2) of said slide channel (3);
said spreading machine (1) being **characterized in that** said cavity (17) is positioned at the second end edge (25) of the guide surface (16) of said separation body (15).

4. Spreading machine (1) according to claim 3, **characterized in that** said separation body (15) is provided with a distribution surface (26) being extended between said cavity (17) and the second end edge (25) of said guide surface (16), and on such distribution surface (26) the lower face of said strip of grids is susceptible to slide in order to uniformly distribute said layer of active material paste that remained adherent to said lower face.

5. Spreading machine (1) according to claim 4, **characterized in that** said cavity (17) is longitudinally delimited between a first longitudinal side (23') and a second longitudinal side (23 "), said distribution surface (26) being extended between said second longitudinal side (23") and the second end edge (25) of said separation body (15).

6. Spreading machine (1) according to claim 4 or 5, **characterized in that** the distribution surface (26) of said separation body (15) has substantially rounded form with convexity that is extended on the guide surface (16) of said support body (15).

7. Spreading machine (1) according to claim 6, **characterized in that** said distribution surface (26) is extended for an arc of circumference with diameter approximately comprised between 2 and 10 mm, and preferably approximately 4 mm.

8. Spreading machine (1) according to any one of the preceding claims, **characterized in that** said cavity (17) has approximately 0.5 - 1.5 mm depth, and preferably approximately 0.7 - 0.8 mm depth.

9. Spreading machine (1) according to any one of the preceding claims, **characterized in that** said cavity (17) is extended according to said extension direction (X) for a width approximately comprised in the interval 2 - 8 mm and preferably approximately 4 mm.

10. Spreading machine (1) according to any one of the preceding claims, **characterized in that** said cavity (17) is extended longitudinally on said guide surface (16) substantially orthogonal to said extension direction (X) and has a transverse profile with substantially V-shaped section.

## Patentansprüche

1. Legemaschine (1) für Gitter zur Herstellung elektrischer Akkumulatoren, die Folgendes umfasst:
- eine Trägerstruktur (2) mit wenigstens einem Gleitkanal (3), der entlang einer Verlaufsrichtung (X) verläuft, entlang der er geeignet ist, ein mit einer Vielzahl von durchgehenden Öffnungen ausgestattetes Gitterband vorzuschieben;
- mindestens einen über dem genannten Gleitkanal (3) angeordneten Trichter (4) mit mindestens einer unteren Öffnung (6), über die der genannte Trichter (4) geeignet ist, eine Paste aus aktiver Materie auf dem genannten Gitterband zu verteilen;
- auf der genannten Trägerstruktur (2) montierte Stützvorrichtungen (11), die mindestens teilweise unter dem genannten Trichter (4) positioniert und mit einer beweglichen Oberfläche (12) ausgestattet sind, die geeignet ist, das genannte Gitterband zumindest auf dem Ablegeabschnitt (T1) des genannten Gleitkanals (3) aufzunehmen, der unter der unteren Öffnung (6) des genannten Trichters (4) angeordnet ist;
- wenigstens einen, mit der genannten Trägerstruktur (2) fest verbundenen und in dem genannten Gleitkanal (3) im Verhältnis zur Vorschubrichtung des genannten Gitterbands vor dem genannten Ablageabschnitt (T1) positionierten Trennkörper (15), der mit einer Führungsfläche (16) ausgestattet ist, auf der eine Unterseite des genannten Gitterbands gleiten kann; wobei der genannte Trennkörper (15) mindestens teilweise über der beweglichen Oberfläche (12) der genannten Stützelemente (11) positioniert ist und geeignet ist, das genannte Gitterband im Abstand von der genannten beweglichen Oberfläche (12) beim Gleiten auf einem Trennabschnitt (T2) des genannten Gleitkanals (3) zwischen dem genannten Trennkörper (15) und dem genannten Ablageabschnitt (T1) zu führen und sich mindestens teilweise unter der unteren Öffnung (6) des genannten Trichters (4) erstreckt;
wobei die genannte Legemaschine (1) **dadurch gekennzeichnet ist, dass** der genannte Trennkörper (15) mit einem Hohlraum (17) auf der genannten Führungsfläche (16) ausgestattet ist, die unter der unteren Öffnung (6) des genannten Trichters (4) angeordnet und geeignet ist, in ihrem Inneren mindestens einen Teil der genannten Paste aktiver Materie aufzunehmen, die von dem genannten Trichter (4) auf dem genannten Gitterband verteilt wird und die Öffnungen der genannten Gitter überquert und dabei unter das genannte Gitterband fällt; wobei das genannte Gitterband geeignet ist, über dem genannten Hohlraum (17) zu gleiten und dabei seine Unterseite mit einer Oberflächenschicht des genannten, in dem genannten Hohlraum (17) enthaltenen Teils der Paste aktiver Materie in Kontakt zu bringen, wobei diese Oberflächenschicht an der genannten Unterseite anhaftet und diese bedeckt.

2. Legemaschine (1) nach Anspruch Nummer 1, **dadurch gekennzeichnet, dass** der Hohlraum (17) des genannten Trennkörpers (15) mindestens entlang einer Richtung quer zu der Verlaufsrichtung (X) des genannten Gleitkanals (3) im Wesentlichen auf der gesamten Breite der genannten Führungsfläche (16) verläuft.

3. Legemaschine (1) nach Anspruch Nummer 1 oder 2, bei der die Führungsfläche (16) des genannten Trennkörpers (15) nach der genannten Verlaufsrichtung (X) zwischen einem ersten Endrand (24) und einem zweiten Endrand (25) angrenzend an den Trennabschnitt (T2) des genannten Gleitkanals (3) verläuft;
wobei die genannte Legemaschine (1) **dadurch gekennzeichnet ist, dass** der genannte Hohlraum (17) auf dem zweiten Endrand (25) der Führungsfläche (16) des genannten Trennkörpers (15) positioniert ist.

4. Legemaschine (1) nach Anspruch Nummer 3, **dadurch gekennzeichnet, dass** der genannte Trennkörper (15) mit einer Verteilungsfläche (26) ausgestattet ist, die zwischen dem genannten Hohlraum (17) und dem zweiten Endrand (25) der genannten Führungsfläche (16) verläuft, wobei die Unterseite des genannten Gitterbands geeignet ist, die Verteilungsfläche (26) zu streifen, um die genannte Schicht Paste aktiver Materie gleichmäßig zu verteilen, die an der genannten Unterseite haften geblieben ist.

5. Legemaschine (1) nach Anspruch Nummer 4, **dadurch gekennzeichnet, dass** der genannte Hohlraum (17) längs zwischen einer ersten Längskante (23') und einer zweiten Längskante (23") begrenzt ist, wobei die genannte Verteilungsfläche (26) zwischen der genannten zweiten Längskante (23") und dem genannten zweiten Endrand (25) des genannten Trennkörpers (15) verläuft.

6. Legemaschine (1) nach Anspruch Nummer 4 oder 5, **dadurch gekennzeichnet, dass** die Verteilungsfläche (26) des genannten Trennkörpers (15) eine im Wesentlichen abgerundete Form mit Wölbung aufweist, die auf der Führungsfläche (16) des genannten Trennkörpers (15) verläuft.

7. Legemaschine (1) nach Anspruch Nummer 6, **dadurch gekennzeichnet, dass** die genannte Verteilungsfläche (26) auf einem Umfangsbogen mit einem Durchmesser zwischen ca. 2 und 10 mm und vorzugsweise ca. 4 mm verläuft.

8. Legemaschine (1) nach einem beliebigen der vorangegangenen Ansprüche, **dadurch gekennzeichnet, dass** der genannte Hohlraum (17) ca. 0,5 - 1,5 mm und vorzugsweise ca. 0,7 - 0,8 mm tief ist.

9. Legemaschine (1) nach einem beliebigen der vorangegangenen Ansprüche, **dadurch gekennzeichnet, dass** der genannte Hohlraum (17) entlang der genannten Verlaufsrichtung (X) auf einer Breite von ca. 2 - 8 mm und vorzugsweise ca. 4 mm verläuft.

10. Legemaschine (1) nach einem beliebigen der vorangegangenen Ansprüche, **dadurch gekennzeichnet, dass** der genannte Hohlraum (17) längs auf der genannten Führungsfläche (16) im Wesentlichen orthogonal zu der genannten Verlaufsrichtung (X) verläuft und ein Querprofil mit im Wesentlichen V-förmigem Querschnitt aufweist.

## Revendications

1. Machine d'épandage (1) de grilles pour obtenir des batteries de stockage électrique, comprenant :
- une structure de support (2) munie d'au moins un canal de coulissement (3) qui se développe selon une direction de développement (X) le long de laquelle est susceptible d'avancer une bande de grilles munies d'une pluralité de trous passants ;
- au moins une trémie (4) disposée au-dessus dudit canal de coulissement (3) et munie d'au moins une ouverture inférieure (6), à travers laquelle ladite trémie (4) est destinée à distribuer une pâte de matière active sur ladite bande de grilles ;
- moyens de soutien (11) montés sur ladite structure de support (2), positionnés au moins en partie sous ladite trémie (4), et munis d'une surface mobile (12) susceptible de recevoir en appui ladite bande de grilles au niveau d'un tronçon d'appui (T1) dudit canal de coulissement (3) disposé sous l'ouverture inférieure (6) de ladite trémie (4) ;
- au moins un corps de séparation (15), solidaire à ladite structure de support (2), situé dans ledit canal de coulissement (3) en amont dudit tronçon d'appui (T1) par rapport au sens d'avancement de ladite bande de grilles, et muni d'une surface de guidage (16) sur laquelle il est susceptible de faire coulisser une face inférieure de ladite bande de grilles ;
ledit corps de séparation (15) étant positionné au moins en partie au-dessus de la surface mobile (12) desdits moyens de soutien (11), et étant destiné à guider ladite bande de grilles pour coulisser séparément de ladite surface mobile (12) au niveau d'un tronçon de séparation (T2) dudit canal de coulissement (3) disposé entre ledit corps de séparation (15) et ledit tronçon d'appui (T1), et s'étendant au moins en partie sous l'ouverture inférieure (6) de ladite trémie (4) ;
ladite machine d'épandage (1) étant **caractérisée en ce que** ledit corps de séparation (15) est muni d'une cavité (17) réalisée sur ladite surface de guidage (16), disposée sous l'ouverture inférieure (6) de ladite trémie (4), et destinée à recevoir à l'intérieur au moins une partie de ladite pâte de matière active distribuée par ladite trémie (4) sur ladite bande de grilles et qui traverse les trous desdites grilles jusqu'à tomber sous ladite bande de grilles ; ladite bande de grilles étant destinée à coulisser au-dessus de ladite cavité (17) jusqu'à amener sa face inférieure au contact d'une couche superficielle de ladite partie de pâte de matière active contenue dans ladite cavité (17), ladite couche superficielle adhérant à ladite face inférieure jusqu'à la recouvrir.

2. Machine d'épandage (1) selon la revendication numéro 1, **caractérisée en ce que** la cavité (17) dudit corps de séparation (15) s'étend au moins selon une direction transversale à la direction de développement (X) dudit canal de coulissement (3) essentiellement sur toute la largeur de ladite surface de guidage (16).

3. Machine d'épandage (1) selon la revendication numéro 1 ou 2, où la surface de guidage (16) dudit corps de séparation (15) s'étend selon ladite direction de développement (X) entre un premier bord d'extrémité (24) et un second bord d'extrémité (25) adjacent au tronçon de séparation (T2) dudit canal de coulissement (3) ; ladite machine d'épandage (1) étant **caractérisée en ce que** ladite cavité (17) est positionnée au niveau du second bord d'extrémité (25) de la surface de guidage (16) dudit corps de séparation (15).

4. Machine d'épandage (1) selon la revendication numéro 3, **caractérisée en ce que** ledit corps de séparation (15) est muni d'une surface de distribution (26) qui s'étend entre ladite cavité (17) et le second bord d'extrémité (25) de ladite surface de guidage (16), et sur ladite surface de distribution (26) est susceptible de passer la face inférieure de ladite bande de grilles pour distribuer uniformément ladite couche de pâte de matière active adhérant à ladite face inférieure.

5. Machine d'épandage (1) selon la revendication numéro 4, **caractérisée en ce que** ladite cavité (17) est délimitée longitudinalement entre un premier bord longitudinal (23') et un second bord longitudinal (23"), ladite surface de distribution (26) s'étendant entre ledit second bord longitudinal (23") et le second bord d'extrémité (25) dudit corps de séparation (15).

6. Machine d'épandage (1) selon la revendication numéro 4 ou 5, **caractérisée en ce que** la surface de distribution (26) dudit corps de séparation (15) a une forme essentiellement arrondie avec une convexité qui se développe sur la surface de guidage (16) dudit corps de support (15).

7. Machine d'épandage (1) selon la revendication numéro 6, **caractérisée en ce que** ladite surface de distribution (26) se développe sur un arc de circonférence avec un diamètre compris environ entre 2 et 10 mm, et préférablement d'environ 4 mm.

8. Machine d'épandage (1) selon l'une des revendications précédentes, **caractérisée en ce que** ladite cavité (17) a une profondeur d'environ 0.5 - 1.5 mm, et préférablement d'environ 0.7 - 0.8 mm.

9. Machine d'épandage (1) selon l'une des revendications précédentes, **caractérisée en ce que** ladite cavité (17) s'étend selon ladite direction de développement (X) sur une longueur comprise environ dans l'intervalle 2 - 8 mm et préférablement d'environ 4 mm.

10. Machine d'épandage (1) selon l'une des revendications précédentes, **caractérisée en ce que** ladite cavité (17) se développe longitudinalement sur ladite surface de guidage (16) essentiellement orthogonalement à ladite direction de développement (X) et présente un profil transversal à section essentiellement en forme de V.
